# EUROPEAN PATENT SPECIFICATION

(11) **EP 0 457 522 B1**
(45) Date of publication and mention of the grant of the patent: **06.03.1996**
(21) Application number: 91304259.4
(22) Date of filing: 13.05.1991
(51) Int. Cl.: H04N 5/202

(54) **Gamma correction circuits**
Gammakorrekturschaltungen
Circuits de correction de gamma

(30) Priority: 14.05.1990 JP 121236/90
(43) Date of publication of application: 21.11.1991
(73) Proprietor: SONY CORPORATION, Tokyo 141 (JP)
(72) Inventor: Murayama, Hideaki, c/o Patents Division, Shinagawa-ku, Tokyo 141 (JP); Yamamoto, Isamu, c/o Patents Division, Shinagawa-ku, Tokyo 141 (JP)
(74) Representative: Cotter, Ivan John

(56) References cited:
- EP-A- 0 390 179
- EP-A- 0 455 426
- DE-A- 3 833 077
- US-A- 4 187 519
- ROYAL TELEVISION SOCIETY JOURNAL. vol. 14, no. 11, September 1973, LONDON GB pages 261 - 264; BALDWIN: 'The digital television studio centre'

## Description

This invention relates to gamma correction circuits.

The relationship between a grid signal voltage and a luminous output of a colour image receiving tube is not linear. The luminous output is proportional to, for example, 2.2-th power of an input signal applied to the grid. For this reason, if a signal from a video camera is applied to a colour image receiving tube without prior treatment, not only the luminance of an image on the screen, but also the hue and/or saturation, vary to a large degree. To prevent this, prior to applying it to the colour image receiving tube the input signal is passed through a gamma correction circuit having an input/output characteristic such that the output signal is equal to, for example, the 2.2-th power of the input signal, thereby to provide that the overall characteristic is linear. It is possible to position such a gamma correction circuit to process the signal immediately before it is applied to the grid of the colour image receiving tube. However, from the points of view of economy and stability, such a gamma correction circuit is generally not provided in association with a colour image receiver of a domestic electric apparatus. Instead, it is provided on the transmitting side, generally in a video camera.

In recent years, digital video signal processing technology for digitally processing a video signal has been widely used in video cameras, in which case the camera has been provided with a gamma correction circuit constructed as a digital circuit.

For example, it has been proposed to use a so-called mapping system in which a gamma correction characteristic prepared in advance is stored in memory and a gamma corrected digital video signal is read from the memory. More specifically, an output signal level of the input/output characteristic for the gamma correction is stored in advance in the memory and an output signal level is read from the memory by using an input signal level as a readout address for the memory to provide a gamma corrected output signal.

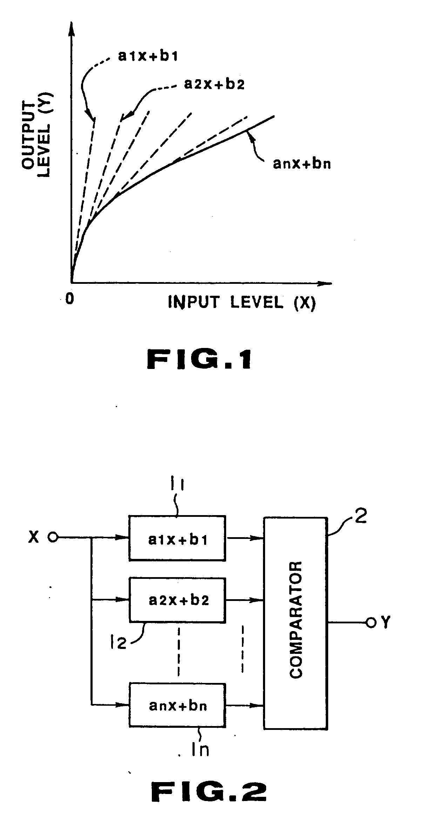

Further, as shown in Figure 1 of the accompanying drawings, for example, it has been proposed to use a gamma correction circuit designed to perform gamma correction using a polygonal line approximating to a desired gamma correction characteristic. More specifically, as shown in Figure 2, an approach is used in which characteristics of respective lines (line segments or portions) forming an approximation to a polygonal line are realised in respective operation circuits l₁ to lₙ comprising multiplier circuits and adder circuits, etc., and outputs from the respective operation circuits l₁ to lₙ are compared with each other in a comparison circuit (comparator) 2 to select the minimum value, thereby to provide a gamma corrected digital video signal.

In the above-described gamma correction technique employing the mapping system, it is necessary to store all points on a curve (Y=X^{(1/r)}) representative of the gamma correction characteristic. As a result, a memory of large capacity is required. A further problem is that, when an approach enabling realising of a high tone to increase the number of bits of a digital video signal is adopted, a memory of larger capacity is required. Particularly in the case of constructing the gamma correction circuit as an integrated circuit (IC), e.g. a so-called gate array, etc., the increased memory capacity is an obstruction. Further, the memory configuration generally employed is a configuration in which 8 bits are taken as one byte for carrying out writing and reading of bytes of data. Accordingly, if the number of bits per sample of a digital video signal is greater than 8, the use efficiency of the memory is poor.

Moreover, in the case of altering the gamma correction characteristic in correspondence with different gamma correction characteristics, for example for different broadcasting stations, the entirety of the memory contents must be rewritten. Since the capacity of the memory is large, it takes a great deal of time to prepare data, to write the prepared data into the memory, and the like.

Further, in the case of the gamma correction circuit as described with reference to Figures 1 and 2, if an attempt is made to increase the number of lines with a view to improving the precision of the polygonal line approximation, the number of operation circuits increases accordingly, resulting in the problem that the circuit scale becomes large. Furthermore, if the number of lines is above a certain value, it is difficult to realise a gamma correction circuit. In addition, it is necessary to alter characteristics (coefficients aᵢ, bᵢ : i = 1 to n) of all the operation circuits l₁ to lₙ in order to vary the gamma correction characteristic. However, this is impossible from a practical point of view.

An article by J L E Baldwin entitled "The digital television studio centre" and published in THE ROYAL TELEVISION SOCIETY JOURNAL, Vol. 14, No. 11, September 1973, London, England, discloses a gamma correction circuit for a digital video signal, the circuit being in accordance with the pre-characterising part of claim 1 hereof.

According to a first aspect of the invention there is provided a gamma correction circuit according to the pre-characterising part of claim 1 hereof for a digital video signal, the circuit being characterised in that:
slope data, intercept data and bend point data of respective line segments of a polygonal line approximating a correction curve obtained by subtracting the level of a video signal which is not yet gamma-corrected from said gamma correction characteristic are stored in the memory means;
a subtractor means is provided for subtracting, from said digital video signal, bend point data read out from the memory means in accordance with said readout address data, and supplying the subtracted output to the multiplier means;
second adder means is provided for adding the output of the first-mentioned adder means to said digital video signal to output a gamma corrected digital video signal; and
second multiplier means is provided for multiplying the output of the first-mentioned adder means by a coefficient and supplying a multiplied output to the second adder means.

The gamma correction circuit according to the invention enables a desired gamma correction of a digital video signal to be carried out by using slope data and intercept data of respective line segments or portions read out from the memory means, and allows the gamma correction characteristic to be changed by multiplying the level data read out from the memory means by different suitable coefficient data.

A preferred embodiment of the invention described in detail hereinbelow provides a gamma correction circuit which permits the memory capacity to be smaller than that of the prior proposal described above, in carrying out gamma correction of a digital video signal by using a polygonal line approximating to a desired gamma correction characteristic, and thus permits the entire circuit scale to be smaller. Also, the preferred embodiment permits changing of the gamma correction characteristic with a circuit scale smaller than that of the prior proposal described above.

The invention will now be further described, by way of illustrative and non-limiting example, with reference to the accompanying drawings, in which:
Figure 1 is a graphical representation of how an approximation to a polygonal line is achieved in a previously proposed gamma characteristic circuit;
Figure 2 is a block diagram of the previously proposed gamma correction circuit;
Figure 3 is a block diagram of another gamma correction circuit;
Figure 4 is a graphical representation of a polygonal line achieved when a gamma correction characteristic is subjected to a 32 polygonal line approximation in the gamma correction circuit shown in Figure 3;
Figure 5 is a block diagram of a gamma correction circuit according to an embodiment of this invention; and
Figure 6 is a graphical representation of a polygonal line achieved when a curve obtained by drawing a line represented by Y=X from a gamma correction characteristic is approximated by 32 polygonal lines in the gamma correction circuit shown in Figure 5.

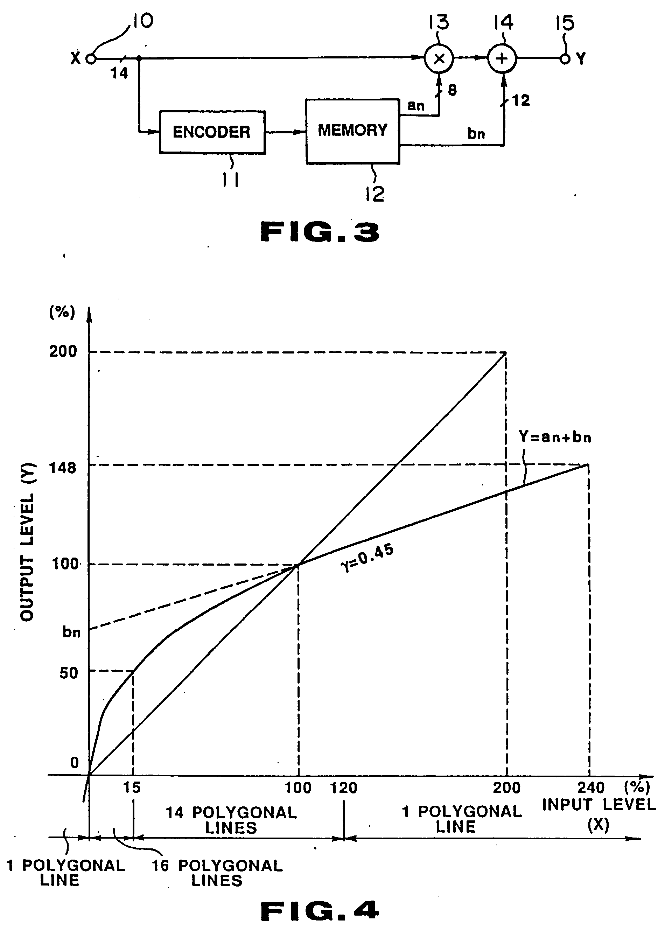

Figure 3 shows the configuration of a gamma correction circuit. In Figure 3, a digital video signal X provided by converting a video signal from a charge coupled device (CCD) image sensor (hereinafter referred to as a CCD) of, for example, a video camera to a digital signal is supplied to an encoder 11 and to a multiplier circuit 13 from an input terminal 10.

The encoder 11 converts the input digital video signal X to a readout address for a memory circuit 12.

The memory circuit 12 comprises, for example, a random access memory (RAM). In the memory circuit 12, slopes (hereinafter referred to as slope data aₙ) and intercepts (hereinafter referred to as intercept data bₙ) of respective line segments forming a polygonal line approximating to a gamma correction characteristic, that is a curve represented by Y=X^{(1/r)}, are stored. The slope data aₙ and the intercept data bₙ stored in the memory circuit 12 are read out on the basis of a readout address from the encoder 11. The slope data aₙ thus read out are supplied to the multiplier circuit 13, and the intercept data bₙ thus read out are supplied to an adder circuit 14.

The multiplier circuit 13 multiplies the input digital video signal X supplied via the input terminal 10 by slope data aₙ from the memory circuit 12 and supplies the multiplied result (product) to the adder circuit 14.

The adder circuit 14 adds the output from the multiplier circuit 13 and intercept data bₙ from the memory circuit 12 to output the added result (sum), at an output terminal 15, as a gamma corrected digital video signal Y.

Thus, in this circuit, the memory circuit 12 is used as memory means for storing slope data and intercept data of respective line segments, the encoder 11 is used as address conversion means for converting a level of an input signal to a readout address for the memory circuit 12, the multiplier circuit 13 is used as multiplier means for multiplying slope data aₙ, read out from the memory circuit 12 on the basis of an address from the encoder 11, by an input signal, and the adder circuit 14 is used as adder means for adding intercept data bₙ, read out from the memory circuit 12 on the basis of an address from the encoder 11, and the multiplied value (product) from the multiplier circuit 13.

The operation of the gamma correction circuit of Figure 3 will now be described in more detail.

The memory circuit 12 stores, as mentioned above, slope data an and intercept data bₙ of respective line segments of a polygonal line approximating to the gamma correction characteristic. In more precise terms, as shown in Figure 4, for example: when an input digital video signal X is less than 0% of a so-called reference white level, the gamma correction characteristic is approximated by 1 polygonal line; when that signal X is 0 to 15%, corresponding to the black area where an output signal varies to a large degree, the gamma correction characteristic is approximated by 16 polygonal lines; when that signal X is 15 to 120%, the gamma correction characteristic is approximated by 14 polygonal lines; and when that signal X is more than 120%, the gamma correction characteristic is approximated by 1 polygonal line. Then, slope data aₙ (assumed to comprise, for example, 8 bits) and intercept data bₙ (assumed to comprise, for example, 12 bits) are stored in the memory circuit 12. Thus, for example, in the case of the above-mentioned 32 polygonal line approximation, the capacity of the memory circuit 12 is equal to 640 (= (8+12) x 32) bits. (As another example, in the case of a 64 polygonal line approximation, the capacity of the memory circuit 12 is equal to 1280 (= (8+12) x 64) bits.)

The encoder 11 converts the input digital video signal X supplied via the input terminal 10 to a readout address for the memory circuit 12. In more precise terms, in the case of the above-mentioned 32 polygonal line approximation: when the input digital video signal X is less than 0% of the reference white level, the input digital video signal X of, for example, 14 bits is converted to one address; when that signal X is 0 to 15%, the input digital video signal X is converted to 16 addresses; when that signal X is 15 to 120%, the input digital video signal X is converted to 14 addresses; and when that signal X is more than 120%, the input digital video signal X is converted to one address. Namely, the input digital video signal X of 14 bits is converted to a readout address of 5 bits in correspondence with the 32 polygonal line approximation. Then, slope data aₙ and intercept data bₙ read out by using this readout address are supplied to the multiplier circuit 13 and the adder circuit 14, respectively.

The multiplier circuit 13 multiplies the input digital video signal X by the slope data aₙ, and the adder circuit 14 adds the output from the multiplier circuit 13 and the intercept data bₙ. Thus, a gamma corrected digital video signal Y is outputted from the output terminal 15, the signal Y being given by the equation:${\text{Y = a}}_{\text{n}} {\text{x X + b}}_{\text{n}}$

As stated above, slope data aₙ and intercept data bₙ of respective line segments of a polygonal line approximating to a desired gamma correction characteristic are written in advance into the memory circuit 12. At the encoder 11, the input digital video signal X is converted to a readout address for the memory circuit 12 so that slope data aₙ and intercept data bₙ are read out from the memory circuit 12 on the basis of the readout address so that the operation expressed by Equation (1) above is performed by the multiplier circuit 13 and the adder circuit 14, thereby providing a gamma corrected digital video signal. In this case, it is unnecessary to store, in the memory circuit 12, data representing respective points on the polygonal line. Thus, for example, in the case of the 32 line polygonal approximation as described above, since it is sufficient to store 32 sets of slope data aₙ and intercept data bₙ, the capacity of the memory circuit 12 can be reduced. Further, the operation circuit can be constituted by the single multiplier circuit 13 and the single adder circuit 14. Thus, the gamma correction circuit can be realised on a circuit scale smaller than that of the previous proposal described above with reference to Figure 2.

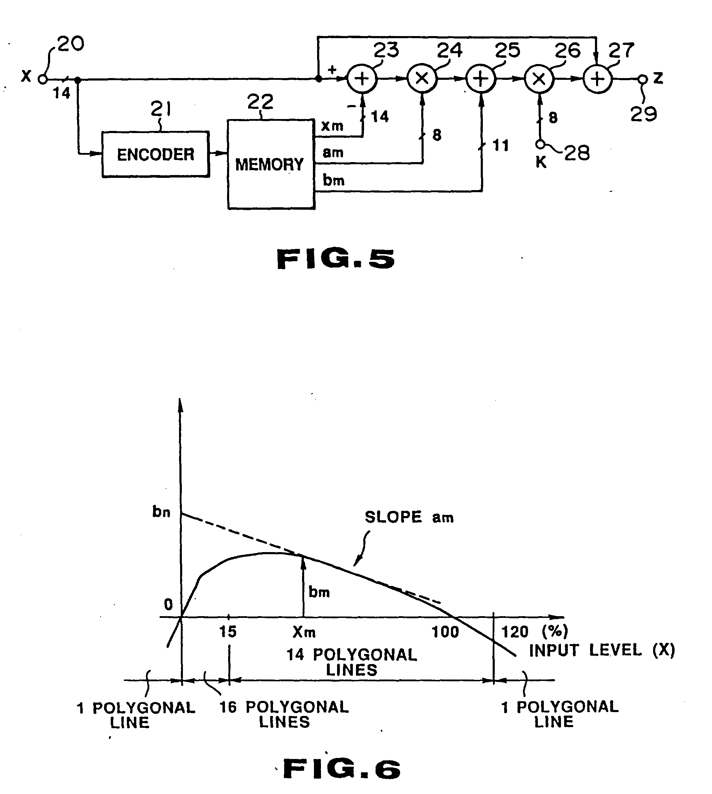

A gamma correction circuit according to an embodiment of this invention is shown in Figure 5.

In Figure 5, an input digital video signal X is supplied to an encoder 21, and to adder circuits 23 and 27, from an input terminal 20.

The encoder 21 converts the input digital video signal X to a readout address for a memory circuit 22 in the same manner as in the circuit of Figure 3.

The memory circuit 22 may, for example, comprise a RAM. The memory circuit 22 stores data described below for drawing a line represented by Y=X from the gamma correction characteristic, that is the curve represented by Y=X^{(1/r)}, to allow the curve thus provided to be subject to polygonal line approximation. Namely, slopes of respective line segments (hereinafter referred to as slope data aₘ) of the polygonal line, levels of the input digital video signal X at respective bend points (hereinafter referred to as bend point data Xₘ), and levels of the polygonal line at the bend point data Xₘ (hereinafter referred to as intercept data bₘ) are stored. The slope data aₘ, the intercept data bₘ, and the bend point data Xₘ stored in the memory circuit 22 are read out on the basis of the readout address from the encoder 21. The bend point data Xₘ thus read out are supplied to a subtraction terminal of the adder circuit 23, the slope data aₘ thus read out are supplied to a multiplier circuit 24, and the intercept data bₘ are supplied to an adder circuit 25.

The adder circuit 23 subtracts the bend point data Xₘ from the input digital video signal X supplied from the input terminal 20 and supplies the subtracted result to the multiplier circuit 24.

The multiplier circuit 24 multiplies an output from the adder circuit 23 by slope data aₘ from the memory circuit 22 and supplies the multiplied result (product) to the adder circuit 25.

The adder circuit 25 adds an output from the multiplier circuit 24 and intercept data bₘ from the memory circuit 22 and supplies the added result (sum) to a multiplier circuit 26.

The multiplier circuit 26 multiplies an output from the adder circuit 25 by a coefficient K for altering the gamma correction characteristic and supplies the multiplied result (product) to the adder circuit 27. The coefficient K is supplied to the multiplier circuit 28 via a terminal 28.

The adder circuit 27 adds an output from the multiplier circuit 26 and the input digital video signal X to output, at an output terminal 29, the added result (sum) as a gamma corrected digital video signal Z.

The operation of the gamma correction circuit of Figure 5 will now be described in more detail.

The memory 22 stores, as mentioned above, data described below for drawing a line represented by Y=X from a gamma correction characteristic to allow the curve thereby obtained to be subjected to polygonal line approximation. Namely, slope data aₘ of respective line serpents of the polygonal line, bend point data Xₘ of levels of an input digital video signal at respective bend points, and intercept data bₘ at bend point data Xₘ, are stored. In more precise terms, a curve obtained by drawing a line represented by Y=X from the gamma correction characteristic is approximated as shown in Figure 6, for example. Namely: when the input digital video signal X is less than 0% of the reference white level, the above-mentioned curve is approximated by 1 polygonal line; when that signal X is 0 to 15%, the above-mentioned curve is approximated by 16 polygonal lines; when that signal X is 15 to 120%, the above-mentioned curve is approximated by 14 polygonal lines; and when that signal X is more than 120%, the above-mentioned curve signal is approximated by 1 polygonal line. Then, slope data aₘ of respective line segments or portions of 32 polygonal lines and assumed to comprise 8 bits, bend point data Xₘ assumed to comprise 14 bits, and intercept data bₘ at respective levels Xₘ assumed to comprise 11 bits, are stored in the memory circuit 22.

The encoder 21 converts an input digital video signal X to a readout address for the memory circuit 22. In more precise terms, in the case of the 32 polygonal line approximation, an input digital video signal X of, for example, 14 bits is converted to a readout address of 5 bits in correspondence with the 32 polygonal approximation in the same manner as in the circuit of Figure 3. Then, bend point data Xₘ read out by using this readout address are supplied to the adder circuit 23, the slope data aₘ similarly ready out are supplied to the multiplier circuit 24, and the intercept data bₘ similarly read out are supplied to the adder circuit 25.

The adder circuit 23 subtracts the bend point data Xₘ from the input digital video signal X, the multiplier circuit 24 multiplies an output from the adder circuit 23 by the slope data aₘ, the adder circuit 25 adds an output from the multiplier circuit 24 to the intercept data bₘ, the multiplier circuit 26 multiplies an output from the adder circuit 25 by the coefficient K supplied via the terminal 28, and the adder circuit 27 adds an output from the multiplier circuit 26 to the input digital video signal X. Thus, a gamma corrected digital video signal Z is outputted from the output terminal 29, the signal Z being given by the equation:${\text{Z = (a}}_{\text{m}} {\text{x (X - X}}_{\text{m}} {\text{) + b}}_{\text{m}} \text{) x K + X}$

At the points where the input digital video signal X is 0% and 100%, the value of the first term of Equation (2) becomes equal to zero. Thus, by varying the coefficient K, it is possible to vary the curve of the gamma correction characteristic without changing the gamma correction characteristic at the points where the input digital video signal X is 0% and 100%.

As stated above, slope data aₘ, intercept data bₘ, and bend point data Xₘ of respective line segments of a polygonal line approximating to a curve obtained by drawing a line represented by Y=X from the gamma correction characteristic are written in advance in the memory circuit 22. At the encoder 21, the input digital video signal X is converted to a readout address for the memory circuit 22 so that the slope data aₘ, the intercept data bₘ, and the bend point data Xₘ are read out from the memory circuit 22 on the basis of this readout address so that the operation expressed by Equation (2) is carried out by the circuits 23 to 27, thereby providing a gamma corrected digital video signal Z. In this case, it is unnecessary to store data representing respective points on the polygonal line in the memory circuit 22. Thus, for example, in the case of the 32 polygonal line approximation as described above, since it is sufficient to store 32 sets of slope data aₘ, intercept data bₘ, and bend point data Xₘ, the capacity of the memory circuit 22 can be reduced. Further, the operation circuit can be constituted by the two multiplier circuits 24 and 26 and the three adder circuits 23, 25 and 27. Thus, the gamma correction circuit can be constituted on a circuit scale smaller than that of the prior proposal described above. In addition, the gamma correction characteristic can be altered by altering the coefficient K supplied via the terminal 28.

Further, by subtracting bend point data Xₘ from the input digital video signal X at the adder circuit 23, the number of bits multiplied at the multiplier circuit 24 can be smaller than that of the embodiment of Figure 3. In addition, since the maximum value of the intercept data bₘ of this embodiment is smaller than the maximum value of the intercept data bₙ of the circuit of Figure 3, the number of bits can be smaller than that of the circuit of Figure 3.

As described above, the gamma correction circuit according to the above embodiment employs an approach of storing advance slope data and intercept data of respective line segments of a polygonal line approximating a desired gamma correction characteristic in a memory means, converting a level of an input signal to a readout address for the memory means in address conversion means, and reading out the slope data and intercept data from the memory means on the basis of this readout address to perform a processing operation at multiplier means and adder means, thereby to provide a gamma corrected digital video signal. Thus, it is unnecessary to write data representing respective points on the polygonal line into the memory means, whereby it is possible to reduce the capacity of the memory means. Further, the circuitry for carrying out the above-mentioned operation can be simply constituted. Thus, the gamma correction circuit can be realised on a circuit scale smaller than that of the prior proposal described above. In other words, it becomes easy to construct the gamma correction circuit as an IC, and the power consumption can be smaller than that of the prior proposal. As a result, the number of line segments forming a polygonal line can be larger than that of the prior proposal, so that it is possible for the precision of the approximation to be high. In addition, by changing values of the slope data and the intercept data stored into the memory means, it is possible to readily cope with diverse gamma correction characteristics, for example in dependence upon broadcasting stations.

## Claims

1. A gamma correction circuit for a digital video signal, the circuit comprising:
memory means (22) for storing slope data and intercept data of each of a plurality of portions of a polygonal line approximating to a desired gamma correction characteristic;
converter means (21) for converting the digital video signal to readout address data for the memory means (22);
multiplier means (24) for multiplying slope data, read out from the memory means (22) in accordance with said readout address data, by the digital video signal; and
adder means (25) for adding intercept data read out from the memory means (22) in accordance with said readout address data to an output from the multiplier means (24) to provide a gamma corrected output therefrom;
the gamma correction circuit being characterised in that:
slope data, intercept data and bend point data of respective line segments of a polygonal line approximating a correction curve obtained by subtracting the level of a video signal which is not yet gamma-corrected from said gamma correction characteristic are stored in the memory means (22);
a subtractor means (23) is provided for subtracting, from said digital video signal, bend point data read out from the memory means (22) in accordance with said readout address data, and supplying the subtracted output to the multiplier means (24);
second adder means (27) is provided for adding the output of the first-mentioned adder means (25) to said digital video signal to output a gamma corrected digital video signal; and
second multiplier means (26) is provided for multiplying the output of the first-mentioned adder means (25) by a coefficient (K) and supplying a multiplied output to the second adder means (27).

2. A gamma correction circuit according to claim 1, wherein the memory means (22) stores slope data, intercept data and bend point data of each portion of 32 polygonal lines, the circuit being so operative that approximation by said 32 polygonal lines is carried out such that: the correction curve for an input video signal of less than 0% with respect to the reference white level is approximated by one polygonal line; the correction curve for an input video signal of 0 to 15% with respect to said reference white level is approximated by 16 polygonal lines; the correction curve for an input video signal of 15 to 120% with respect to said reference white level is approximated by 14 polygonal lines; and the correction curve for an input video signal of more than 120% with respect to said reference white level is approximated by one polygonal line.

3. A gamma correction circuit according to claim 1 or claim 2, which is incorporated in a digital video camera having an image pick-up means for generating a video signal corresponding to an object image and analog-to-digital converter means for converting the generated video signal to said digital video signal.

## Patentansprüche

1. Gammakorrekturschaltung für ein digitales Videosignal, wobei die Schaltung umfaßt:
eine Speichereinrichtung (22) zum Speichern von Neigungsdaten und Abschnittsdaten von jedem von einer Vielzahl von Bereichen einer polygonalen Linie, welche sich einer gewünschten Gammakorrekturcharakteristik annähern;
eine Umsetzungseinrichtung (21) zum Umsetzen des digitalen Videosignals in Auslese-Adreßdaten für die Speichereinrichtung (22);
eine Multiplikationseinrichtung (24) zum Multiplizieren der Neigungsdaten, welche aus der Speichereinrichtung (22) gemäß den Auslese-Adreßdaten ausgelesen worden sind, mit dem digitalen Videosignal; und
eine Additionseinrichtung (25) zum Addieren der Abschnittsdaten, welche aus der Speichereinrichtung (22) gemäß den Auslese-Adreßdaten ausgelesen worden sind, zu einem Ausgangssignal der Multiplikationseinrichtung (24), um daraus ein gammakorrigiertes Ausgangssignal bereitzustellen;
wobei die Gammakorrekturschaltung dadurch gekennzeichnet ist,
daß Neigungsdaten, Abschnittsdaten und Krümmungspunktdaten von jeweiligen Liniensegmenten einer polygonalen Linie, welche sich einer Korrekturkurve annähern, welche durch Subtraktion des Pegels eines Videosignals, welches noch nicht nach der Gammakorrekturcharakteristik gammakorrigiert worden ist, erhalten worden ist, in der Speichereinrichtung (22) gespeichert werden;
daß eine Subtraktionseinrichtung (23) zum Subtrahieren der Krümmungspunktdaten, welche aus der Speichereinrichtung (22) gemäß den Auslese-Adreßdaten ausgelesen worden sind, von dem digitalen Videosignal, und zur Zuführung des subtrahierten Ausgangssignals zu der Multiplikationseinrichtung (24) vorgesehen ist;
daß eine zweite Additionseinrichtung (27) zur Addition des Ausgangssignals der zuerst genannten Additionseinrichtung (25) zu dem digitalen Videosignal vorgesehen ist, um ein gammakorrigiertes digitales Videosignal auszugeben; und
daß eine zweite Multiplikationseinrichtung (26) zum Multiplizieren des Ausgangssignals der zuerst genannten Additionseinrichtung (25) mit einem Koeffizienten (K) und zur Zuführung eines multiplizierten Ausgangssignals zu der zweiten Addiereinrichtung (27) vorgesehen ist.

2. Gammakorrekturschaltung nach Anspruch 1, bei welcher die Speichereinrichtung (22) Neigungsdaten, Abschnittsdaten und Krümmungspunktdaten von jedem Bereich von 32 polygonalen Linien speichert, wobei die Schaltung derart betriebsfähig ist, daß die Annäherung durch die 32 polygonalen Linien derart ausgeführt wird:
daß die Korrekturkurve für ein Videoeingangssignal von weniger als 0% bezüglich des Bezugsweißpegels durch eine polygonale Linie angenähert wird; daß die Korrekturkurve für ein Videoeingangssignal von 0 bis 15% bezüglich des Bezugsweißpegels durch 16 polygonale Linien angenähert wird; daß die Korrekturkurve für ein Videoeingangssignal von 15 bis 120% bezüglich des Bezugsweißpegels durch 14 polygonale Linien angenähert wird, und daß die Korrekturkurve für ein Videoeingangssignal von mehr als 120% bezüglich des Bezugsweißpegels durch eine polygonale Linie angenähert wird.

3. Gammakorrekturschaltung nach Anspruch 1 oder 2, welche in einer digitalen Videokamera, die eine Bildaufnahmeeinrichtung zur Erzeugung eines Videosignals, das einem Gegenstandsbild entspricht, und eine Analog-Digital-Umsetzungseinrichtung zum Umsetzen des erzeugten Videosignals in das digitale Videosignal besitzt, eingebaut ist.

## Revendications

1. Circuit de correction de gamma pour un signal vidéo numérique, le circuit comprenant:
- des moyens de mémoire (22) pour mémoriser des données de pente et des données d'intersection de chaque partie d'une pluralité de parties d'une ligne polygonale approximant une caractéristique désirée de correction de gamma;
- des moyens de conversion (21) pour convertir le signal vidéo numérique en données d'adresse pour les moyens de mémoire (22);
- des moyens de multiplication (34) pour multiplier les données de pente lues dans les moyens de mémoire (22) selon lesdites données d'adresse lues, par le signal vidéo numérique; et
- des moyens d'addition (25) pour additionner les données d'intersection lues dans les moyens de mémoire (22) selon lesdites données d'adresse lues et un signal de sortie issu des moyens de multiplication (24) pour fournir un signal de sortie corrigé en gamma à partir de ceux-ci,
le circuit de correction de gamma étant caractérisé en ce que:
- les données de pente, les données d'intersection et les données de points d'inflexion des segments de droite respectifs d'une ligne polygonale approximant une courbe de correction obtenue en soustrayant le niveau d'un signal vidéo qui n'est pas encore corrigé en gamma de ladite caractéristique de correction de gamma, sont mémorisées dans les moyens de mémoire (22);
- des moyens de soustraction (23) sont prévus pour soustraire dudit signal vidéo numérique les données de points d'inflexion lues dans les moyens de mémoire (22) selon lesdites données d'adresse lues, et fournir le signal de sortie soustrait aux moyens de multiplication (24);
- des deuxième moyens d'addition (27) sont prévus pour additionner le signal de sortie des premiers moyens d'addition (25) et ledit signal vidéo numérique pour fournir un signal vidéo numérique corrigé en gamma; et
- des deuxièmes moyens de multiplication (26) sont prévus pour multiplier le signal de sortie des premiers moyens d'addition (25) par un coefficient (K) et fournir le signal de sortie multiplié aux deuxièmes moyens d'addition (27).

2. Circuit de correction de gamma selon la revendication 1, dans lequel les moyens de mémoire (22) mémorisent les données de pente, les données d'intersection et les données de points d'inflexion de 32 segments d'une ligne polygonale, le circuit fonctionnant de telle manière que l'approximation par lesdits 32 segments d'une ligne polygonale est effectuée de telle manière que la courbe de correction pour un signal vidéo d'entrée de moins de 0% par rapport au niveau de référence du blanc est approximée par un segment de la ligne polygonale, la courbe de correction pour un signal vidéo d'entrée de 0 à 15% par rapport audit niveau de référence du blanc est approximée par 16 segments de la ligne polygonale, la courbe de correction pour un signal vidéo d'entrée de 15 à 120% par rapport audit niveau de référence du blanc est approximée par 14 segments de la ligne polygonale; et la courbe de correction pour un signal vidéo d'entrée de plus de 120% par rapport audit niveau de référence du blanc est approximée par un segment de la ligne polygonale.

3. Circuit de correction de gamma selon la revendication 1 ou la revendication 2, qui est incorporé à une caméra vidéo numérique ayant des moyens capteurs d'images pour produire un signal vidéo correspondant à une image d'un objet, et des moyens de convertisseur analogique/numérique pour convertir le signal vidéo produit en ledit signal vidéo numérique.
